# EUROPEAN PATENT APPLICATION

(11) **EP 2 500 963 A1**
(43) Date of publication of application: **19.09.2012**
(21) Application number: 12158699.4
(22) Date of filing: 09.03.2012
(51) Int. Cl.: H01M 2/10, H01M 10/42, H01M 10/48

(54) **Battery-pack**

(30) Priority: 16.03.2011 IT TO20110236
(71) Applicant: BITRON S.p.A., 10122 Torino (IT)
(72) Inventor: Bigotto, Piercarlo, 10095 Grugliasco (TO) (IT); Fiando, Angelo, 10028 Trofarello (TO) (IT)
(74) Representative: Di Gennaro, Sergio

(57) **Abstract**

A battery pack "P" comprising a plurality of batteries or cells "B", which are electrically connected to one another, a monitoring circuit 3, which comprises a plurality of electrical sensors 31, adapted to monitor at least one parameter of the operating state of each single battery or cell "B", and an outer casing 1, adapted to protect said battery pack "P";
The battery pack "P" comprises, furthermore, a printed circuit or a motherboard 4, on which a plurality of electrical tracks are provided, which is arranged inside casing 1, and to which said batteries or cells "B", said circuit 3 and said sensors 31 are mechanically and electrically connected. Sensors 31 are arranged on the surface of the printed circuit in correspondence to a housing 2, which holds each single battery or cell "B", of which at least one parameter has to be monitored.

## Description

The present invention is relative to a battery pack or to a multi-cell battery for supplying power to electrical devices in general, wherein each single battery/cell making up the battery pack is connected on a printed circuit; furthermore, in correspondence to each single battery/cell, there is provided a temperature sensor, which is connected to the printed circuit, as well.

Types of battery packs are known, in which a plurality of batteries are electrically connected to one another, so as to provide a battery with a high energy storage capacity, and are mechanically locked to one another by means of a plastic sheath.

Furthermore, cell batteries are known, which comprise, in their inside, a plurality of piles or cells, which are properly connected to one another, so as to provide a battery pack, and are surrounded by an outer casing.

Normally, the electrical contacts are present on at least one face of said outer casing, said electrical contacts being provided in different shapes and sizes according to the technical field in which the battery itself is used.

Each battery/cell making up the battery pack is normally monitored by means of a temperature sensor during the charging phase of the single battery or cell.

Said sensor, in case a given temperature threshold is exceeded, deactivates the single cell or battery, thus interrupting its charging phase.

The batteries making up the battery pack are electrically connected to one another, so as to create a single equivalent battery with a very high electrical energy storage capacity, or in order to reach desired voltage and/or current values.

The battery packs with the features described above are normally used to supply power to medium and big electrical devices, such as, for example, electrical tools and/or vehicles.

In some cases, possible mechanical stresses can cause an interruption of the electrical connection between the different batteries or cells or, in some cases, a short circuit between the contacts of the batteries.

It is known that the short circuit of a battery causes an increase, in a very short time, of its temperature and, in the worst case, the explosion of the battery itself, with the consequent safety problems.

Casings are known, which are adapted to house a plurality of batteries (with a single cell or with multiple cells) in such a way that the single batteries making up the battery pack are prevented from moving in case of mechanical stresses.

Said casings normally are exoskeletons comprising housings where the different batteries can be arranged.

Normally, the sensors, which are arranged in correspondence to the single batteries/cells, are connected to a monitoring circuit by means of floating wires, which are properly routed in suitable guides.

The floating connection between the sensor and the monitoring circuit, in case of mechanical stresses, is more subject to breakings and disconnections, thus interrupting the electrical connection between the sensor and the monitoring circuit.

The interruption of the connection between the sensor and the monitoring circuit does not allow the monitoring of the state of the batteries associated to the sensors themselves, which are not connected to the monitoring circuit itself any longer.

This drawback can cause a deterioration of the cell/battery in question and of the surrounding batteries/cells, which can be subject to possible overheating, thus remarkably reducing the charge storage capacity of the battery pack itself.

The object of the present invention is to solve the problems described above by providing a battery pack or a multi-cell battery, adapted to monitor the temperature of each single cell/battery connected, wherein the single cells/batteries are mechanically and electrically connected on a printed circuit; furthermore, a sensor, for example a temperature sensor, is fixed on the printed circuit itself in correspondence to each single battery/cell and is electrically connected to a monitoring circuit by means of electrical tracks, which are obtained on the printed circuit itself.

An aspect of the present invention relates to a battery pack, adapted to supply power to electrical devices, with the features set forth in appended claim 1.

The accessory features of the present invention are set forth in the appended dependent claims.

The features and the advantages of the battery pack will be better understood upon perusal of the following detailed description of a preferred embodiment of the battery pack with reference to the accompanying drawings, which specifically illustrate what follows:
- figures 1A, 1B, 1C show, in an orthographic projection, an embodiment of the battery pack comprising the casing according to the present invention;

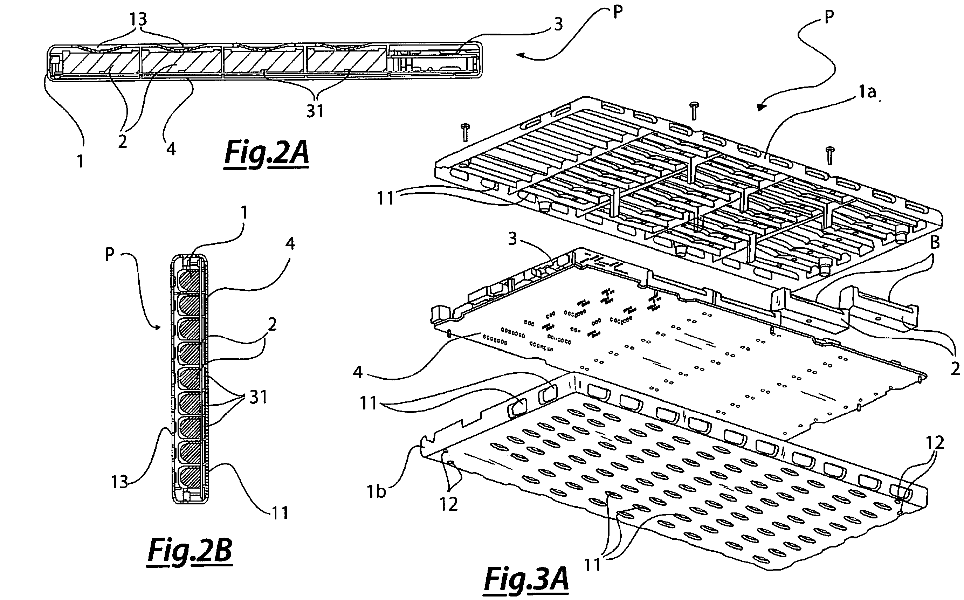

- figures 2A, 2B show an orthographic projection view, in section, of the battery pack of figures 1A, 1B and 1C;

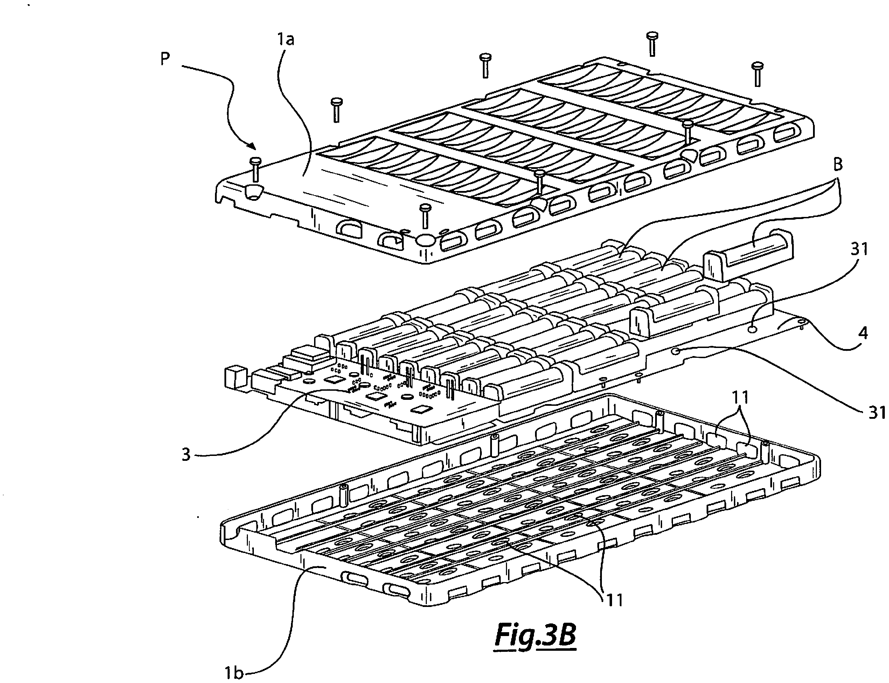

- figures 3A, 3B show an exploded view of the battery pack according to the present invention; in particular, figure 3A shows a top view, whereas figure 3B shows a bottom view;

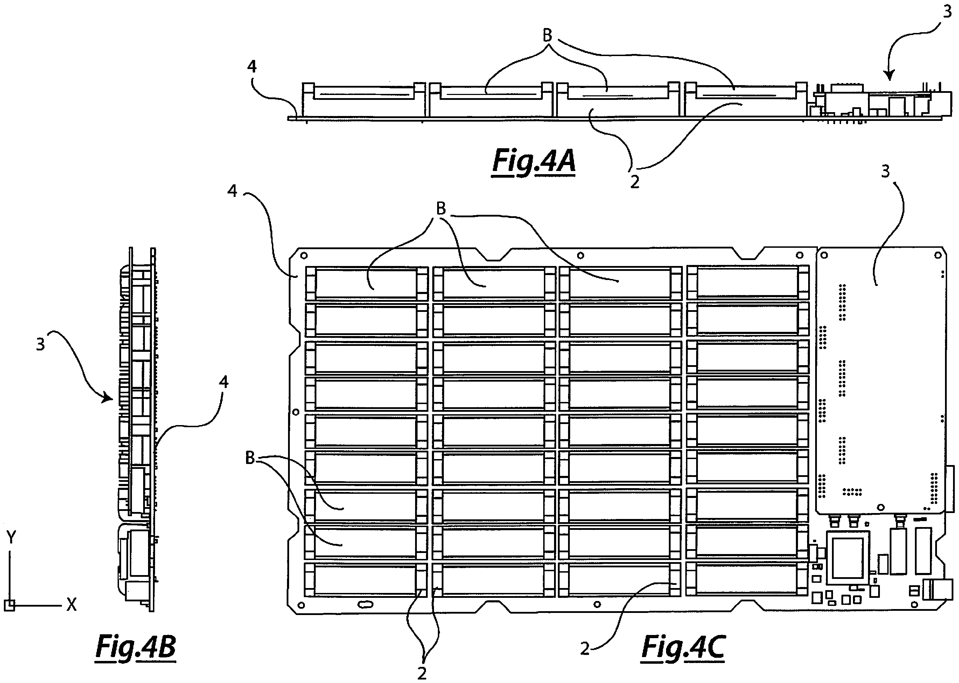

- figures 4A, 4B, 4C show, in an orthographic projection, the printed circuit or motherboard of the battery pack according to the present invention;

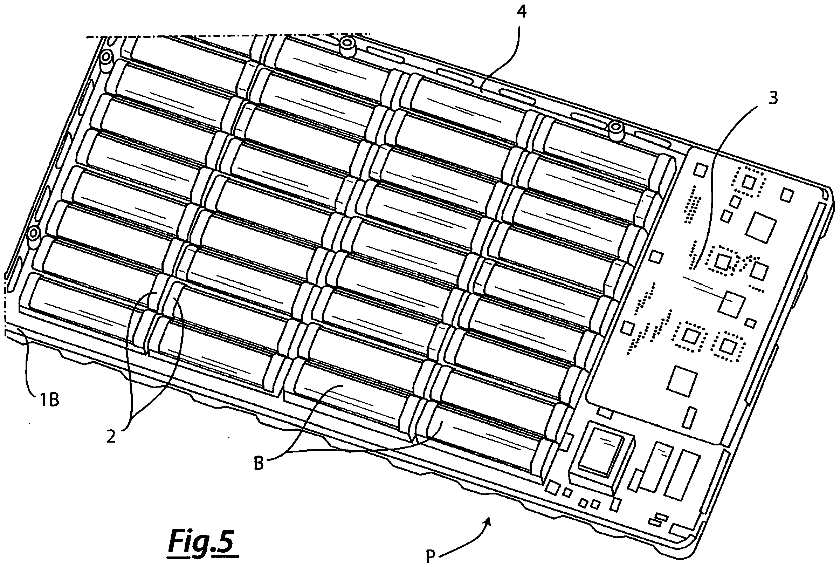

- figure 5 shows, in a prospective view, the board shown in figures 4A, 4B, 4C;
- figures 6 shows, in a front view, a detail of the arrangement of the housings on the printed circuit according to the present invention;
- figure 7 shows the flowchart of the monitoring circuit comprised in the battery pack according to the present invention.

With reference to the figures mentioned above, the battery pack "P" comprises a plurality of rechargeable batteries or cells "B", which are electrically connected to one another, a monitoring circuit 3, which comprises a plurality of electrical sensors 31 and adapted to monitor at least one parameter of the operating state of each single battery or cell "B", and an outer casing 1, adapted to protect said battery pack "P".

Said battery pack "P" comprises a printed circuit or a motherboard 4, on which, in turn, a plurality of electrical tracks are provided.

Said batteries or cells "B", said monitoring circuit 3 and said sensors 31 are mechanically and electrically connected to said printed circuit 4, which is arranged inside casing 1, by means of the plurality of electrical tracks; said sensors 31 being arranged on the surface of the printed circuit in correspondence to a housing 2, which holds each single battery or cell "B", of which at least one parameter has to be monitored.

For the purpose of the present description, the term "mechanically connected" involves a preferably rigid fixing between a first structure (monitoring circuit 3 and/or sensors 31, etc.) and the surface of a second structure (printed circuit 4).

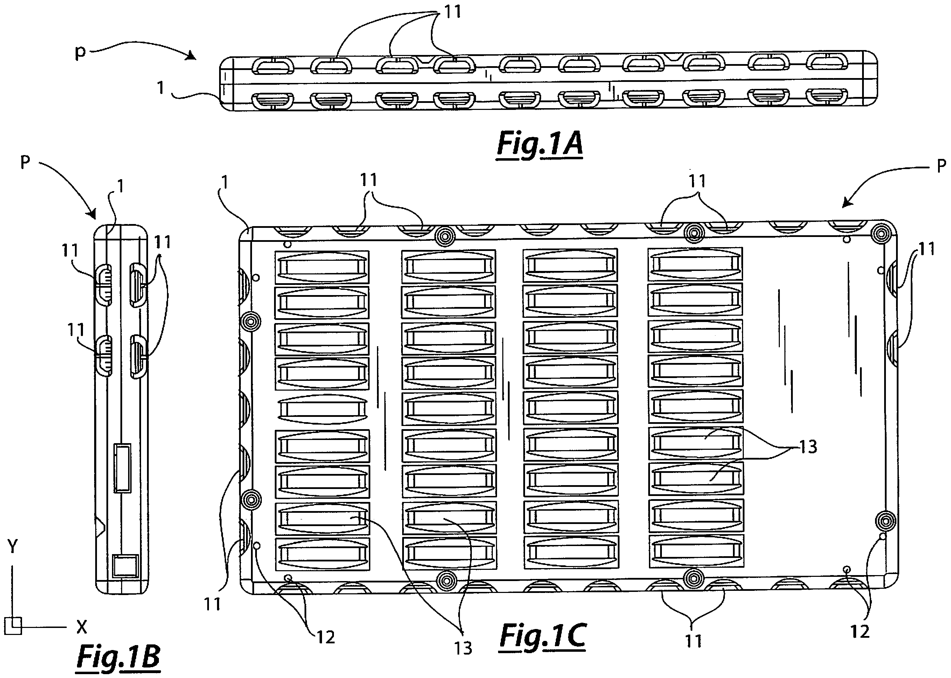

In the embodiment shown in figure 1, housing 2 is adapted to lock said battery or cell "B" and to electrically connect to battery or cell "B" itself to battery pack "P". Said housing 2 comprises a cathode contact and an anode contact, to which the associated battery or cell "B" is electrically connected.

The electrical connection of the plurality of batteries or cells "B" is such to obtain a battery pack "P" with the electrical features, the charge storage capacity features and tension features desired based on the application in which said battery pack "P" is applied.

Each housing 2 is mechanically connected to printed circuit 4 by means of a plurality of pins, which are coupled to holes obtained on printed circuit 4 itself.

The electrical connection among the plurality of housings 2, in order to obtain a battery pack "P" with the features desired, is carried out by welding on said electrical tracks a plurality of pins, which, in turn, are electrically connected to the anode and cathode contacts comprised in said housings 2.

Said housings 2 are arranged on said printed circuit 4 as a grid or an array, so as to provide a preferably planar, compact and ordered structure with housings 2 being suitably spaced from one another.

The array arrangement of housings 2 is such as to allow an air recirculation between different housings 2, in order to control the temperature of the single cells or batteries "B".

Said housing 2, in the embodiment shown in the figures, is basically a battery compartment that is similar, in terms of structure, to the one typically used in electronic devices supplied with power by means pf pocket batteries, such as, for example, batteries of the A, AA, AAA series, etc.

Battery/cell "B", preferably a penlight-size battery/cell, is arranged inside said housing 2 in the appropriate direction according to the orientation of the cathode and anode contacts comprised in housing 2.

Said housing 2 allows the single faulty/flat cells or batteries "B" to be replaced and therefore to be maintained without the need to interfere mechanically and/or electrically on monitoring circuit 3 and, furthermore, without the need to perform weldings for the reconnection of a new cell or battery "B", adapted to replace the faulty/flat one that has been removed.

At least one sensor 31 is mechanically connected in correspondence to each housing 2; said sensor 31 being electrically connected to monitoring circuit 3 by means of at least one electrical track.

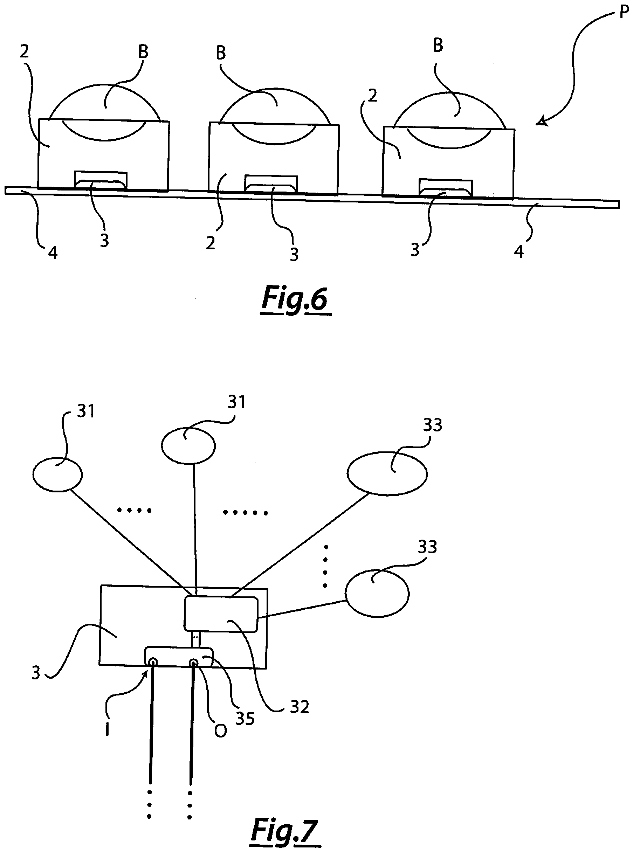

In particular, each sensor 31 is mechanically fixed on the surface of circuit 4, preferably the upper surface, upon which housing 2 is arranged so as to be arranged on top of sensor 31 itself, as shown in figure 6.

Said sensor 31 is preferably a temperature sensor, adapted to detect the temperature of associated battery/cell "B", which is preferably arranged over said sensor 31.

In alternative embodiments, several sensors 31 are provided in correspondence to each cell/battery "B", each one of said several sensors 31 being adapted to monitor at least one parameter, so as to obtain, besides the temperature, a plurality of items of information/data, such as, for example, the voltage/current of each single cell or battery "B", in order to correctly manage each cell or battery "B", thus increasing its operating life.

The electronic signals, which are produced by sensors 31 which contain the items of information/data that are useful in managing battery pack "P", are received by monitoring circuit 3, which comprises a data processing unit 32, adapted to process the data coming from the plurality of sensors 31 and to manage a plurality of charge control devices 33, such as, for example, "Battery Charging" circuits, "Battery Gauging" circuits, "Battery Protection" circuits, and "Battery Cell Balancing" circuits, which are normally comprised in a system for controlling the charge of a battery "B".

Said monitoring circuit 3 is able to signal the presence and the position, within the array of batteries or cells "B", of a flat or faulty battery or cell "B", thus allowing the latter to be rapidly replaced.

The arrangement of batteries "B" in an array and the association of at least one sensor 31 to each single cell or battery "B", sensor 31 being arranged under battery "B" and being fixed on printed circuit 4, allow the user to determine the exact position of the faulty or flat cell or battery "B".

A plurality of sensors 31, adapted to determine the temperature, are thermistors or RTDs or other small electrical sensors, adapted to measure temperatures.

Outer casing 1, adapted to cover battery pack "P" and has the shape of a prism with a rectangular base, as shown in figures 1A, 1B and 1C, comprises an upper half-shell 1a and a lower half-shell 1b, which are connected to one another, for example, by means of fixing or interlocking means.

Said upper half-shell 1a and said lower half-shell 1b comprise, in turn, a plurality of ventilation openings 11, which are uniformly arranged on said portions of the casing and are adapted to allow air to circulate inside the casing, so as to control the temperature of the plurality of batteries or cells "B".

A plurality of connection holes 12, furthermore, is provided on said half-shells (1a, 1b), said connection holes 12 being adapted to allow the mechanical connection of different battery packs "P" by means of a battery positioning system (not shown), so as to obtain a complex modular structure.

Said ventilation openings 12, which are preferably comprised in upper half-shell 1a of outer casing 1, comprise a plurality of damping elements 13, each one associated to a battery/cell "B", which are adapted to act on said batteries/cells "B".

Said damping elements 13, by pressing on said batteries/cells "B", are adapted to dampen the vibrations to which said batteries/cells "B" may be subject, thus preventing batteries/cells "B" from coming out, even partially, of their own housing 2 due to mechanical stresses.

In the embodiment shown in the figures, said damping elements 13 have the shape of a leaf spring, which curvature is adapted to absorb the vibrations of the battery/cell "B" acting thereon, thus preventing the latter from coming out of corresponding housing 2.

As mentioned above, monitoring circuit 3, which comprises a plurality of sensors 31 and is adapted to monitor at least one parameter of the operating state of each single battery or cell "B" comprised in battery pack "P", comprises, furthermore, a connection portion 35, as shown in figure 7.

Said connection portion 35 comprises at least one outlet port "O" and at least one inlet port "I" and is adapted to interface each single battery pack "P" with other battery packs "P", so as to obtain a complex modular structure.

Said ports (I, O) are arranged in correspondence to an opening provided on an outer face of the casing, so as to be easily accessible.

Inlet port "I" and outlet port "O" of said connection portion 35 respectively comprise a cathode contact and an anode contact, to which ends the electronic devices can be connected, so as to allow the latter to properly function.

The above-mentioned inlet port "I" and outlet port "O" comprise, furthermore, connection systems, for example for a series or parallel connection, through which electrical signals are transferred from and to an external control unit, adapted to mange the connection of a plurality of battery packs "P".

Said external control unit, by means of the data obtained from each single battery pack "P", manages the charge and the discharge of each battery pack "P"

In case of faults of at least part of the whole structure, the external control unit, by means of the data obtained from each single battery pack "P", insulates the single battery pack "P" containing, for example, at least one flat or faulty cell or battery "B".

The data sent from each single battery pack "P" to the external control unit comprises the information obtained both from the monitoring performed through sensors 31 of each single cell or battery "B" and from charge control devices 33.

Said connection systems convey electrical signals, such as, for example, signals concerning the activation and/or deactivation of each battery pack "P"

When the external control unit receives an activation or deactivation signal, the monitoring circuit disables the whole battery pack "P", which can be excluded from the delivery or the storage of energy.

This deactivation of a particular battery pack "P" allows the user to replace a single cell/battery or the whole battery pack 1 without the need for the device to be in AC mode.

The battery pack according to the present invention allows the monitoring of each single cell or battery "B" comprised in the battery pack by using sensors 31, which are directly connected to the printed circuit 4, where the battery themselves are fixed.

The arrangement of sensor 31 under housing 2, in which cell or battery "B" is arranged, allows a better monitoring of said cell or battery "B", thus preventing the electrical connection between sensor 31 and monitoring circuit 3 from being interrupted.

Battery pack "P" according to the present invention is used to supply power to electrical devices with different dimensions and power required, since said battery pack "P" allows the mechanical and electrical connection to other battery packs, so as to obtain a complex modular structure with the electrical features needed.

## Claims

1. Battery pack (P) comprising a plurality of batteries or cells (B), which are electrically connected to one another, a monitoring circuit (3), which comprises a plurality of electrical sensors (31), adapted to monitor at least one parameter of the operating state of each single battery or cell (B), and an outer casing (1), adapted to protect said battery pack (P);
said battery pack (P) being **characterized in that** it comprises a printed circuit or a motherboard (4), on which a plurality of electrical tracks are provided, which is arranged inside the casing (1), and to which said batteries or cells (B), said circuit (3) and said sensors (31) are mechanically and electrically connected, said sensors (31) being arranged on the surface of the printed circuit in correspondence to a housing (2), which holds each single battery or cell (B), of which said at least one parameter has to be monitored.

2. Battery pack according to claim 1, wherein each sensor (31) is fixed on the upper surface of the printed circuit (4), upon which the housing (2) is arranged, so as to be arranged on top of the sensor (31) itself.

3. Battery pack according to claim 2, wherein each housing (2) comprises a cathode contact and an anode contact, to which the associated battery or cell (B) is electrically connected.

4. Battery pack according to claim 3, wherein a penlight-size battery/cell (B) is arranged inside said housing (2) in the appropriate direction according to the orientation of the cathode and anode contacts comprised in the housing (2).

5. Battery pack according to claim 2, wherein at least one sensor (31) is a temperature sensor, adapted to detect the temperature of the associated battery/cell (B).

6. Battery pack according to claim 2, wherein the monitoring circuit (3) comprise a data processing unit (32), adapted to process the data coming from the plurality of sensors (31), and to manage a plurality of charge control devices (33), adapted to control the battery pack.

7. Battery pack according to claim 6, wherein the charge control devices (33) comprise "Battery Charging" circuits, "Battery Gauging" circuits, "Battery protection" circuits, and "Battery Cell Balancing" circuits.

8. A battery pack according to claim 5, wherein said temperature sensor (31) is a thermistor or a RTD.

9. Battery pack according to claim 3, wherein each housing (2) is mechanically connected to the printed circuit (4) by means of a plurality of pins, which are coupled to a plurality of holes obtained on the printed circuit (4), said housings (2) being arranged on said printed circuit (4) as a grid or an array, so as to provide a preferably planar and compact structure with the housings (2) being suitably spaced from one another.

10. Battery pack according to claim 3, wherein the electrical connection among the plurality of housings (2), in order to obtain a battery pack (P) with the features desired, is carried out by welding on the electrical tracks a plurality of pins, which, in turn, are electrically connected to the anode and cathode contacts comprised in said housings (2).
